# EUROPÄISCHE PATENTSCHRIFT

(11) **EP 4 669 875 B1**
(45) Veröffentlichungstag und Bekanntmachung des Hinweises auf die Patenterteilung: **11.11.2026**
(21) Anmeldenummer: 24706384.5
(22) Anmeldetag: 16.02.2024
(51) Int. Cl.: F16C 29/00

(54) **TELESKOPSCHIENE MIT VERBESSERTER BIEGEFESTIGKEIT**
TELESCOPIC RAIL WITH IMPROVED BENDING STRENGTH
RAIL TÉLESCOPIQUE À RÉSISTANCE À LA FLEXION AMÉLIORÉE

(30) Priorität: 21.02.2023 DE 202023100817 U
(43) Veröffentlichungstag der Anmeldung: 31.12.2025
(73) Patentinhaber: Accuride International GmbH, 65582 Diez/Lahn (DE)
(72) Erfinder: NEUHAUS, Christoph, 56412 Niederelbert (DE)
(74) Vertreter: WSL Patentanwälte Partnerschaft mbB
(86) Internationale Anmeldenummer: PCT/EP2024/054002
(87) Internationale Veröffentlichungsnummer: WO 2024/175493

(56) Entgegenhaltungen:
- DE-A1- 10 340 482
- US-B2- 11 149 790

## Beschreibung

### GEGENSTAND DER ERFINDUNG

Die vorliegende Erfindung betrifft eine Teleskopschiene mit einem ersten Schienenelement, einem zweiten Schienenelement, welches an dem ersten Schienenelement über ein Wälzkörperlager oder ein Gleitlager linear verschiebbar gelagert ist, und optional einem dritten Schienenelement, welches an dem ersten oder dem zweiten Schienenelement über ein Wälzkörperlager oder ein Gleitlager linear verschiebbar gelagert ist.

### HINTERGRUND DER ERFINDUNG

Teleskopschienen im Sinne der vorliegenden Erfindung weisen wenigstens ein erstes und ein zweites Schienenelement und optional ein drittes, gegebenenfalls auch ein viertes Schienenelement auf, welche in der Regel gleich oder ähnlich lang und über Wälzkörperlager oder Gleitlager linear gegeneinander verschiebbar gelagert sind. Teleskopschienen mit zwei Schienenelementen bilden einen sogenannten Teilauszug, wogegen Teleskopschienen mit drei oder mehr Schienenelementen als Vollauszug bezeichnet werden. Wälzkörper- oder Gleitlager zwischen den Schienenelementen dienen der Verminderung der Reibung und zur Verbesserung der Laufruhe und des Lastenabtrags. Als Wälzkörper werden insbesondere Kugeln, aber auch Rollen, Walzen, Nadeln, Kegel, etc. eingesetzt. Beim Verfahren der Schienenelemente gegeneinander werden die Wälzkörper an Laufbahnen abgerollt und geführt, welche entsprechend ihrer Form an den Schienenelementen ausgebildet sind. Bei Gleitlagern werden entweder Gleitkörper zwischen den Schienenelementen an entsprechend ausgebildeten Lauf- oder Gleitbahnen geführt oder die Gleitflächen sind an den Schienenelementen selbst ausgebildet.

Um Wälzkörper in einem bestimmten Abstand zueinander zu halten und um beim Verfahren der Schienenelemente ein Auseinanderlaufen oder auch ein Herausfallen der Wälzkörper aus der Teleskopschiene zu verhindern, werden diese in zwischen den Schienenelementen angeordneten Wälzkörperkäfigen geführt. Werden als Wälzkörper Kugeln eingesetzt, spricht man von Kugelkäfigen. Soweit nachfolgend hierin von Kugeln als Wälzkörper und Kugelkäfigen als Wälzkörperkäfigen die Rede ist, so umfasst dies auch anderer Arten von Wälzkörpern und Wälzkörperkäfigen, soweit es nicht ausdrücklich ausgeschlossen ist oder technische Gründe gegen andere Wälzkörper als Kugeln sprechen.

Teleskopschienen dienen dem geführten linearen Verschieben eines Elements gegenüber einem weiteren Element. In den meisten Anwendungen dienen sie dem Halten und linearen Verschieben, insbesondere dem Herausziehen und Einschieben, eines Auszugselements, wie einer Schublade, eines Tablars oder eines anderen Bauteils, an einem Korpus, wie einem Möbelstück, einem Technikschrank, einem Computerrack oder einem Küchenmöbel, beispielsweise einem Backofen oder Kühlschrank. Auch im Automobilbau werden Teleskopschienen zum Halten und Verschieben von beispielsweise Sitzen, Türen, Konsolen etc. an, in und gegenüber dem Fahrzeug eingesetzt. Die Teleskopschienen werden in diesen Anwendungen mit einem der Schienenelemente, dem sogenannten stationären Schienenelement, an dem Korpus festgelegt, und das Auszugselement an einem gegenüber dem stationären Schienenelement verschiebbaren Schienenelement befestigt. Bei Teleskopschienen mit mehr als zwei gegeneinander verschiebbar gelagerten Schienenelementen, wie beim Vollauszug, wird das Auszugselement an dem vom stationären Schienenelement am weitesten entfernten Schienenelement befestigt.

Die Schienenelemente von Teleskopschienen können verschiedenste Querschnittsprofile aufweisen. Am häufigsten ist das C-Profil mit einem Steg, welcher den Schienenrücken bildet, und mit an gegenüberliegenden Enden des Stegs ausgebildeten und sich abgewinkelt vom Steg erstreckenden Flanschen, an denen die Laufbahnen des Schienenelements ausgebildet sind. In den meisten Anwendungen werden die Schienenelemente mit dem Steg bzw. Schienenrücken in vertikaler Ausrichtung montiert, da das Profil unter Last in dieser Ausrichtung die höchste Biegefestigkeit besitzt und den besten Lastenabtrag über die Wälz- oder Gleitkörper an den Laufbahnen gewährleistet.

Schienenelemente von Teleskopschienen werden je nach Anwendung und den Anforderungen an Auszugslänge, abzutragende Last bzw. Belastbarkeit und verfügbaren Montageraum aus unterschiedlichen Materialien, in unterschiedlichen Größen und mit unterschiedlichen Verfahren hergestellt.

Schienenelemente für geringe bis mittlere Lasten, wie beispielsweise im Möbelbau oder für Backöfen, werden regelmäßig aus gewalztem Stahlblech hergestellt, das als sogenanntes Coil-Material einer bestimmten Materialstärke angeliefert, zugeschnitten und/oder gestanzt und durch Biegeumformung in die gewünschte Form des Profils des Schienenelements gebracht wird. Auf diese Weise lassen sich Schienenelemente auf entsprechenden Fertigungsstraßen in hoher Stückzahl und relativ kostengünstig herstellen. Nachteile ergeben sich bei aus solchen Schienenelementen zusammengesetzten Teleskopschienen, wenn diese für hohe Lasten eingesetzt werden sollen, die mit hohen, vertikal abwärts gerichteten Kräften einhergehen. Insbesondere im ausgezogenen Zustand bewirken diese hohen Kräfte eine starke Biegebelastung, d. h. ein hohes Biegemoment, was dazu führt, dass sich die Schienenelemente durchbiegen, und das Auszugselement nicht in der vorgesehenen horizontalen Ebene verbleibt, in der die Teleskopschiene montiert ist, sondern im ausgezogenen Zustand der Teleskopschiene abkippt bzw. herabhängt. Darüber hinaus kann eine starke Verbiegung der Schienenelemente dazu führen, dass sich die Laufeigenschaften der Wälzkörper- oder Gleitlager erheblich verschlechtern bis hin zu einem Blockieren der Verschiebbarkeit, insbesondere bei der Verwendung langer Wälzkörperkäfige, die wiederum bei hohen Lasten für einen besseren Lastenabtrag benötigt werden.

Um einem derart starken Verbiegen unter hoher Last entgegenzutreten und eine höhere Biegefestigkeit zu erzielen, müssen derzeit solche aus gewalztem Blech gebogenen Schienenelemente stabiler ausgebildet werden, indem gegenüber Teleskopschienen für geringe bis mittlere Lasten dickere Stahlbleche eingesetzt und die Schienenelemente höher und breiter dimensioniert werden. Damit gehen aber wiederum erheblich höhere Kosten aufgrund des größeren Materialbedarfs in Form der Stahlbleche einher. Zudem wird aufgrund der erforderlichen größeren Dimensionierung der Schienenelemente die gesamte Teleskopschiene erheblich höher und breiter und benötigt daher einen größeren Einbauraum, welcher in vielen Anwendungen unerwünscht ist oder gar nicht zur Verfügung steht.

Aus diesem Grund werden insbesondere für hohe Lastanforderungen spezielle Schwerlastschienen eingesetzt, bei denen die Schienenelemente auf andere Weise hergestellt werden als die aus gewalztem Blech gebogenen Schienenelemente. Die Schienenelemente solcher Schwerlastschienen werden üblicherweise mit besonderen Querschnittsgeometrien der Profile hergestellt, welche eine besonders hohe Biegefestigkeit gewährleisten. Hierfür werden beispielsweise die Biegefestigkeit verstärkende Elemente in bestimmten Bereichen des Profils vorgesehen, wie abschnittsweise höhere Wandstärken als in anderen Bereichen, Vorsprünge etc. Solche Profile bieten eine hohe Stabilität des Schienenelements, einschließlich hoher Biegefestigkeit. Sie lassen sich aber nicht in einer einfachen Biegeumformung aus gewalztem Blech herstellen, sondern werden in der Regel aus Stahl mittels einer Matrize oder eines Ziehsteins gezogen, extrudiert oder sogar aus Vollmaterial gefräst. Diese Fertigungsverfahren sind aufwendig und teuer, auch hinsichtlich des Materialaufwands. Zudem weisen solche Schienenelemente häufig ein hohes Eigengewicht auf. Wird bei der Herstellung solcher Schienenelemente zur Verbesserung der Korrosionsbeständigkeit Edelstahl eingesetzt, erhöhen sich die Kosten weiter, da Edelstahl teurer und die Bearbeitung schwerer und aufwendiger ist als bei Normalstahl und auch mehr Material eingesetzt werden muss, da Edelstahl eine geringere Tragkraft als Normalstahl besitzt.

DE 103 40 482 offenbart eine als Gleitschiene ausgebildete Teleskopschiene, welche auf den Gleitflächen einen Überzug aus einem harten Material, insbesondere einen Überzug aus Email, aufweist. Die Teleskopschiene soll für den Lebensmittelbereich und für den Einsatz in Backöfen und Pyrolysebacköfen geeignet sein und ohne Schmiermittel auskommen, weil der Emailüberzug gute Gleiteigenschaften besitzt und hohen Temperaturen standhält.

US 11,149,790 offenbart eine Linearführung mit einem langen Schienenelement und einem darauf verfahrbaren Schlitten. Erfindungsgemäß soll der Schlitten aus einer einzelnen Metallplatte hergestellt sein. Das Schienenelement und der Schlitten können einer Oberflächenhärtung durch an sich bekannte Verfahren unterzogen werden, um den Laufflächen für das Kugellager eine höhere Verschleißbeständigkeit zu verleihen.

### AUFGABE DER ERFINDUNG

Die Aufgabe der vorliegenden Erfindung bestand darin, eine Teleskopschiene bereitzustellen, welche die Nachteile des Standes der Technik ausräumt und die insbesondere kosteneffizient sowie materialsparend mit gegenüber dem Stand der Technik höherer Stabilität, insbesondere höherer Biegefestigkeit herstellbar ist.

### BESCHREIBUNG DER ERFINDUNG

Gelöst wird diese Aufgabe erfindungsgemäß durch eine Teleskopschiene mit einem ersten Schienenelement, einem zweiten Schienenelement, welches an dem ersten Schienenelement über ein Wälzkörperlager oder ein Gleitlager linear verschiebbar gelagert ist, und optional einem dritten Schienenelement, welches an dem ersten oder dem zweiten Schienenelement über ein Wälzkörperlager oder ein Gleitlager linear verschiebbar gelagert ist, und
wobei wenigstens das erste Schienenelement aus einem gewalzten Stahlblech hergestellt ist und die Oberfläche des Stahlblechs eine mittels eines Nitrierverfahrens hergestellte Oberflächenschicht mit einer Nitrierhärtetiefe (Nht) im Bereich von 0,05 mm bis 0,6 mm aufweist.

Die erfindungsgemäße Teleskopschiene ist vorzugsweise entweder als Teilauszug mit einem ersten Schienenelement und einem zweiten Schienenelement oder als Vollauszug mit einem ersten Schienenelement, einem zweiten Schienenelement und einem dritten Schienenelement ausgebildet. Das erfindungsgemäße erste Schienenelement kann ein Außenschienenelement, ein Innenschienenelement oder bei einem Vollauszug auch ein Mittelschienenelement sein. In einer Ausführungsform der Erfindung sind alle Schienenelemente der erfindungsgemäßen Teleskopschiene aus gewalztem Stahlblech hergestellt.

Vorzugsweise ist die gesamte Oberfläche des aus gewalztem Stahlblech hergestellten ersten Schienenelements mit einer mittels eines Nitrierverfahrens hergestellten Oberflächenschicht versehen. In einer Ausführungsform der erfindungsgemäßen Teleskopschiene sind die gesamten Oberflächen aller Schienenelemente der Teleskopschiene mit einer mittels eines Nitrierverfahrens hergestellten Oberflächenschicht versehen.

Die erfindungsgemäße Teleskopschiene besitzt die Vorteile bekannter Teleskopschienen, bei denen die Schienenelemente durch Biegeumformung aus gewalztem Stahlblech hergestellt sind, nämlich im Vergleich zu bekannten, aus gezogenem, extrudiertem oder aus Vollmaterial gefrästem Stahl hergestellten Schwerlastschienen eine wesentlich kostengünstigere Herstellung in hoher Stückzahl. Gleichzeitig besitzen die Schienenelemente mit der erfindungsgemäß mittels eines Nitrierverfahrens hergestellten Oberflächenschicht überraschenderweise eine signifikant höhere Stabilität, insbesondere höhere Biegefestigkeit, sodass die erfindungsgemäßen Teleskopschienen höhere Lastanforderungen erfüllen als Teleskopschienen mit Schienenelementen aus gewalztem Stahlblech ohne die erfindungsgemäße Oberflächenschicht bei gleicher Materialstärke, gleicher Geometrie und gleicher Dimensionierung. Die Vorteile der erhöhten Biegestabilität kommen insbesondere im ausgezogenen Zustand der Teleskopschiene zum Tragen, in dem die Hebelkräfte der belasteten verfahrbaren Schienenelemente auf die stationären Schienenelemente besonders hoch sind.

Die Oberflächenbehandlung von Stahlbauteilen durch Nitrieren ist grundsätzlich ein bekanntes Verfahren, das in der Regel dazu eingesetzt wird, die Korrosionsbeständigkeit des Materials zu verbessern und die Oberflächenhärte zu erhöhen, um die Oberfläche vor Kratzern oder anderen lokalen Beschädigungen sowie vor starker Abrasion zu schützen. Auch bei Teleskopschienen wurde die Nitrierung der Oberfläche bereits eingesetzt, beispielsweise in der EP 2 347 141, um bei einer aus gezogenem Stahl hergestellten, kugel- oder walzengelagerten Teleskopschiene, die für hohe Lasten im Sinne einer Schwerlastschiene konzipiert ist und auch entsprechende Geometrien der Profile der Schienenelemente aufweist, die Oberflächen der Laufbahnen besser gegen Abrieb, Beschädigung und Aufrauhung durch die abrollenden Wälzkörper zu schützen. Aspekte wie die Biegestabilität der Schienenelemente werden in diesem Zusammenhang in der EP 2 347 141 nicht angesprochen und spielen dort offensichtlich auch keine Rolle, da die Schienenelemente ohnehin bereits nach Art einer Schwerlastschiene aus gezogenem Stahl in entsprechend stabilisierter Profilgeometrie hergestellt sind.

Vor diesem Hintergrund war die bei den erfindungsgemäßen Schienenelementen mit der durch ein Nitrierverfahren hergestellten Oberflächenschicht erzielte signifikante Erhöhung der Biegefestigkeit überraschend und nicht zu erwarten. Die erfindungsgemäßen Teleskopschienen können im Vergleich zu bekannten aus gewalztem Stahlblech hergestellten Teleskopschienen bei gleicher Bauart für höhere Lasten eingesetzt werden, ohne dass sich die Teleskopschienen insbesondere im ausgezogenen Zustand stärker als die bekannten Teleskopschienen durchbiegen. Umgekehrt können erfindungsgemäße Teleskopschienen bei gleichen Lastanforderungen mit weniger Materialaufwand hinsichtlich der Materialstärke des verwendeten Stahlblechs und/oder in geringeren Abmessungen der Höhe und Breite hergestellt werden, wodurch Herstellungskosten eingespart werden können und die Teleskopschienen bei gleicher Belastbarkeit geringere Anforderungen an den verfügbaren Einbauraum stellen.

In einer bevorzugten Ausführungsform der Erfindung weist das erste Schienenelement im Querschnitt ein C-Profil auf.

In einer weiteren Ausführungsform der Erfindung sind das zweite Schienenelement und/oder das optionale dritte Schienenelement ebenfalls aus einem gewalzten Stahlblech hergestellt und weisen im Querschnitt ein C-Profil auf und die Oberfläche des Stahlblechs des zweiten Schienenelements und/oder die Oberfläche des Stahlblechs des optionalen dritten Schienenelements weist eine mittels eines Nitrierverfahrens hergestellte Oberflächenschicht auf, vorzugsweise auf der gesamten Oberfläche.

Das C-Profil der aus gewalztem Stahlblech hergestellten Schienenelemente hat Vorteile gegenüber anderen Profilen hinsichtlich wirtschaftlicher Herstellbarkeit mit hohem Durchsatz auf üblichen Fertigungsanlagen und hinsichtlich des Materialaufwands. Durch das Vorsehen der erfindungsgemäßen mittels eines Nitrierverfahrens hergestellten Oberflächenschicht wird die Biegefestigkeit des C-Profils und damit die Belastbarkeit der daraus hergestellten Teleskopschienen signifikant erhöht.

Ein C-Profil im Sinne der vorliegenden Erfindung bezeichnet ein Querschnittsprofil mit einem Steg, welcher den Schienenrücken bildet, und mit an gegenüberliegenden Enden des Stegs ausgebildeten und sich abgewinkelt oder gebogen vom Steg erstreckenden Flanschen (Oberflansch und Unterflansch), an denen die Laufbahnen des Schienenelements ausgebildet sind. Optional können an den freien Enden der Flansche Lippen (Oberlippe und Unterlippe) angeordnet sein, welche sich gegenüber dem Flansch abgewinkelt in Richtung des gegenüberliegenden Flansches erstrecken. Die durch die Erfindung erzielte erhöhte Biegefestigkeit kommt besonders vorteilhaft zum Tragen, wenn die Teleskopschiene mit dem Steg bzw. Schienenrücken der Schienenelemente in vertikaler Ausrichtung montiert wird, da das Profil unter Last in dieser Ausrichtung die höchste Biegefestigkeit besitzt und den besten Lastenabtrag über die Wälz- oder Gleitkörper an den Laufbahnen gewährleistet. Aber auch senkrecht zum Steg bzw. Schienenrücken der Schienenelemente weist die erfindungsgemäße Teleskopschiene eine höhere Biegefestigkeit gegenüber bekannten, aus gewalztem Stahlblech hergestellten Teleskopschienen gleicher Bauart auf.

Zweckmäßigerweise ist der Stahl des gewalzten Stahlblechs, aus welchem die Schienenelemente der erfindungsgemäßen Teleskopschiene hergestellt sind, Baustahl, Edelstahl oder mikrolegierter Stahl. Die Auswahl des Materials hängt dabei unter anderem von wirtschaftlichen Aspekten sowie den Anforderungen an die Teleskopschiene ab. Baustahl hat den Vorteil, dass er günstiger ist als Edelstahl und sich auch leichter bearbeiten und zu den Schienenelementen umformen lässt. Edelstahl oder mikrolegierter Stahl können in bestimmten Anwendungen Vorteile hinsichtlich der Korrosionsbeständigkeit haben. Die jeweiligen Schienenelemente einer Teleskopschiene können auch aus unterschiedlichen Stählen hergestellt sein.

Das Profil des ersten Schienenelements und vorzugsweise auch das Profil des zweiten Schienenelements und/oder des optionalen dritten Schienenelements sind vorzugsweise durch Biegeumformung aus dem gewalztem Stahlblech hergestellt.

Wenn hierin von Teleskopschienen im Sinne der vorliegenden Erfindung die Rede ist, so schließt dies sogenannte Linearführungen aus, welche im Gegensatz zu Teleskopschienen dadurch gekennzeichnet sind, dass ein einzelnes langes Schienenelement über mehrere Befestigungspunkte an einem Korpus oder einer Wand stationär festgelegt oder festlegbar ist und ein sehr kurzes Schienenelement, das auch als Schlitten oder Wagen bezeichnet wird, an dem langen Schienenelement verschiebbar gelagert ist, jedoch nicht über die Enden des langen Schienenelements hinaus. Bei Linearführungen tritt die Problematik der Biegebelastung nicht wie bei Teleskopschienen auf, da bei Linearführungen kein Auszug von verfahrbaren Schienenelementen über die Enden des stationär festgelegten Schienenelements erfolgt und daher auch nicht die bei Teleskopschienen wirkenden Hebelkräfte auftreten. Soweit bei Linearführungen eine Oberflächenbehandlung durch Nitrieren bekannt war, betraf dies lediglich die Oberflächen der Wälzkörperlaufbahnen, um diese gegen Verschleiß durch die abrollenden Wälzkörper zu schützen.

In einer Ausführungsform der erfindungsgemäßen Teleskopschiene weist das Stahlblech des ersten Schienenelements und vorzugsweise auch das Profil des zweiten Schienenelements und/oder des optionalen dritten Schienenelements eine Materialdicke im Bereich von 1,0 mm bis 4,0 mm auf. Vorzugsweise weist das Stahlblech eine Materialdicke im Bereich von 1,2 mm bis 3,0 mm oder von 1,5 mm bis 2,5 mm oder von 1,5 mm bis 2,2 mm auf. Es hat sich gezeigt, dass die erfindungsgemäße Teleskopschiene auch mit einer relativ geringen Materialdicke der Schienenelemente aufgrund der mittels eines Nitrierverfahrens hergestellten Oberflächenschicht der Schienenelemente eine hohe Biegefestigkeit besitzt. Es versteht sich, dass die Stahlbleche verschiedener Schienenelemente derselben Teleskopschiene nicht notwendigerweise die gleiche Materialdicke aufweisen müssen. Regelmäßig werden die Außenschiene, die Innenschiene und eine gegebenenfalls vorhandene Mittelschiene aus Stahlblech unterschiedlicher Materialstärken hergestellt.

In einer weiteren Ausführungsform der erfindungsgemäßen Teleskopschiene weist das Stahlblech des ersten Schienenelements und vorzugsweise auch das Stahlblech des zweiten Schienenelements und/oder des optionalen dritten Schienenelements im gesamten Profil die gleiche Materialdicke mit einer maximalen Toleranzabweichung von nicht mehr als ± 10%, vorzugsweise nicht mehr als ± 5%, besonders bevorzugt nicht mehr als ± 3%, bezogen auf die mittlere Materialdicke des gesamten Stahlblechs des jeweiligen Schienenelements, auf. Dies hat unter anderem Vorteile bei der Herstellung, da die Schienenelemente auf diese Weise aus handelsüblichem Coil-Material hergestellt werden können, welches üblicherweise mit einer über das gesamte Material gleichen Materialdicke geliefert wird. Aufgrund der erhöhten Biegefestigkeit, die durch die mittels eines Nitrierverfahrens hergestellten Oberflächenschicht der Schienenelemente erzielt wird, ist es nicht wie bei bekannten Schwerlastenschienen erforderlich, die Materialdicke innerhalb des Profils in bestimmten Bereichen zu verändern, um eine ausreichende Stabilität, insbesondere Biegefestigkeit der Schienenelemente zu erhalten.

Wie eingangs ausgeführt, ist die Oberflächenbehandlung von Stahlbauteilen durch Nitrieren grundsätzlich ein bekanntes Verfahren, wobei es verschiedene Verfahrensvarianten gibt, wie Gasnitrieren, Plasmanitrieren, Salzbadnitrieren, Vakuumnitrieren etc.. Beim Nitrierprozess wird die Oberfläche des Werkstücks chemisch verändert, indem Stickstoff durch Diffusion eingelagert wird. Wird zum Stickstoff noch Kohlenstoff eingebracht, spricht man vom Nitrocarburieren. An der Werkstückoberfläche bildet sich durch Eindiffusion von Stickstoff eine harte oberflächliche sogenannte Verbindungsschicht, welche Eisennitride sowie gegebenenfalls sogenannte Sondernitride von nitridbildenden Legierungsbestandteilen des Werkstoffs, wie z.B. Chrom, Molybdän, Vanadium oder Aluminium, umfasst. Unter der Verbindungsschicht bildet sich eine Diffusionszone, in welcher der Stickstoff bis zu einer bestimmten Tiefe in die Metallmatrix eingelagert wird. Die von der Werkstückoberfläche ausgehende Dicke bzw. Tiefe der Verbindungsschicht und der Diffusionszone hängt von den Behandlungsparametern ab, insbesondere dem Verfahren an sich, der Behandlungstemperatur und der Behandlungsdauer. Die sogenannte "Nitrierhärtetiefe" (Nht)) oder Nitriding Hardness Depth (NHD) wird über die Grenzhärte definiert, bei der die Härte in der Diffusionszone 50 HV über der Kernhärte des Werkstückes liegt.

Nitrierverfahren werden in der Regel eingesetzt, um das Material durch Erhöhung der äußeren Oberflächenhärte vor lokalen Beschädigungen und Abrasion zu schützen, die Korrosionsbeständigkeit des Materials und gegebenenfalls auch den Reibkoeffizienten der Oberfläche zu verbessern. Durch nachträgliche Oxidation der Verbindungsschicht (direkt im Nitrierprozess oder als separater Prozess) lassen sich die Korrosionsbeständigkeit und der Reibkoeffizient noch einmal verbessern. Dabei wird Eisennitrid an der Oberfläche der Verbindungsschicht des Werkstückes in Eisenoxid umgewandelt und eine Oxidschutzschicht gebildet. Die durch die Nitride ursprüngliche weiße bzw. helle Farbe der Oberfläche ändert sich in anthrazitfarben.

Erfindungsgemäß ist die Oberflächenschicht des ersten Schienenelements und vorzugsweise auch die Oberflächenschicht des zweiten Schienenelements und/oder des optionalen dritten Schienenelements zweckmäßigerweise mittels eines Gasnitrierverfahrens, eines Plasmanitrierverfahrens, eines Vakuumnitrierverfahrens, eines Gas- oder Plasmanitrocarburierverfahrens oder eines Salzbadnitrocarburierverfahrens hergestellt. Besonders bevorzugt ist jedoch das Gasnitrierverfahren. Es ist vergleichsweise kostengünstig und erlaubt eine gute Kontrolle der Nitrierparameter. In einer Ausführungsform der Erfindung ist die durch das Nitrierverfahren hergestellte erfindungsgemäße Oberflächenschicht einer nachträglichen Oxidation unterzogen, sodass die Oberflächenschicht des ersten Schienenelements und vorzugsweise auch die Oberflächenschicht des zweiten Schienenelements und/oder des optionalen dritten Schienenelements durch das dem Nitrierverfahren nachgelagerte Nachoxidationsverfahren gebildetes Eisenoxid enthält.

Bei der erfindungsgemäßen Teleskopschiene liegt die Nitrierhärtetiefe (Nht) der mittels des Nitrierverfahrens hergestellten Oberflächenschicht des ersten Schienenelements im Bereich von 0,05 mm bis 0,6 mm. In einer Ausführungsform der erfindungsgemäßen Teleskopschiene liegt die Nitrierhärtetiefe (Nht) der mittels des Nitrierverfahrens hergestellten Oberflächenschicht des ersten Schienenelements und der Oberflächenschicht des zweiten Schienenelements und des optionalen dritten Schienenelements im Bereich von 0,05 mm bis 0,6 mm, vorzugsweise im Bereich von 0,075 mm bis 0,5 mm oder im Bereich von 0,10 mm bis 0,3 mm oder im Bereich von 0,15 mm bis 0,2 mm, oder alternativ, bezogen auf Materialdicke des Stahlblechs, im Bereich von 1 % bis 40%, vorzugsweise im Bereich von 3 % bis 35 % oder im Bereich von 5 % bis 20 % oder im Bereich von 8 % bis 15 % der Materialdicke des Stahlblechs.

Ist die Nitrierhärtetiefe (Nht) zu gering, kommt der erfindungsgemäße Vorteil einer erhöhten Biegefestigkeit der Schienenelemente nicht oder nur gering zum Tragen. Ist die Nitrierhärtetiefe (Nht) zu hoch, kann dies die Grundelastizität der Schienenelemente aufgrund einer zu tief in das Material eindringenden Materialveränderung, wie Versprödung oder Phasenumwandlung, beeinträchtigen, wodurch die Gefahr von Rissen bis hin zum Bruch der Schienenelemente unter hoher Last und/oder nach längerer Nutzung besteht.

Wenn hierin angegeben ist, dass erfindungsgemäß die Oberfläche des Stahlblechs eines Schienenelements eine mittels eines Nitrierverfahrens hergestellte Oberflächenschicht aufweist, soll nicht ausgeschlossen sein, dass über dieser Oberflächenschicht eine oder mehrere Lagen oder Schichten aufgebracht oder hergestellt sind, wie beispielsweise im Wesentlichen dekorative, schmutzabweisende und/oder gegen Korrosion schützende Lagen oder Schichten. In einer erfindungsgemäßen Ausführungsform ist auf wenigstens einem Schienenelement, vorzugsweise auf allen Schienenelementen über der mittels eines Nitrierverfahrens hergestellte Oberflächenschicht eine galvanisch abgeschiedenen Zinkschicht angeordnet.

### BEISPIEL

In einem Belastungsversuch wurde die Biegefestigkeit einer handelsüblichen Teilauszug-Teleskopschiene mit der Biegefestigkeit einer baugleichen erfindungsgemäßen Teleskopschiene verglichen, bei der die Oberflächen der Stahlbleche der Schienenelemente erfindungsgemäß mit einer mittels eines Nitrierverfahrens hergestellten Oberflächenschicht versehen waren. Die Teleskopschienen bestanden aus zwei jeweils 360 mm langen, kugelgelagert gegeneinander verschiebbar gelagerten Schienenelementen mit C-Profil aus gewalztem Baustahlblech. Das C-Profil des Außenschienenelements hatte eine Höhe von 35 mm und eine Materialstärke des Stahlblechs von 1,52 mm. Das Innenschienenelement hatte eine Materialstärke des Stahlblechs von 2,0 mm. Die maximale Auszugslänge der Teleskopschiene betrug 200 mm. Die Nitriertiefe der erfindungsgemäßen Teleskopschiene, bei der die Schienenelemente beide mit einer mittels eines Nitrierverfahrens hergestellten Oberflächenschicht versehen waren, betrug etwa 0,15 mm.

In der Versuchsanordnung wurden paarweise jeweils zwei handelsübliche bzw. zwei erfindungsgemäße Teleskopschienen einander gegenüberliegend mit den jeweiligen Außenschienenelementen als stationäre Schienenelemente in horizontaler Ausrichtung des Verfahrweges, d. h. mit vertikaler Ausrichtung des Schienenrückens, und mit einander zugewandten Innenschienenelementen an einander gegenüberliegenden Korpuswänden festgelegt. Die Innenschienenelemente waren über einen U-förmigen Hebel, an dessen U-Schenkeln die Innenschienenelemente befestigt waren, verbunden. Die verschiebbaren Innenschienenelemente wurden vollständig ausgezogen (200 mm Auszug) und über den Hebel an einem Belastungspunkt in einem Abstand von 410 mm vom Ende der Außenschiene bzw. 210 mm vom freien Ende der ausgezogenen Innenschiene mit einer vertikal abwärts gerichteten Kraft von 800 Newton belastet. Die Auslenkung, d. h. die vertikal abwärts gerichtete Biegung der Schienen wurde am Belastungspunkt gemessen. Die Auslenkung der zu Vergleichszwecken eingesetzten handelsüblichen Teleskopschienen betrug in diesem Belastungsversuch 18,9 mm, während die Auslenkung der erfindungsgemäßen Teleskopschienen lediglich 6,8 mm betrug. Durch das Versehen der Schienenelemente mit der erfindungsgemäßen Oberflächenschicht konnte die Biegung der Teleskopschienen in diesem Belastungsversuch somit um etwa 64 % gegenüber der handelsüblichen Teleskopschienen reduziert werden.

## Patentansprüche

1. Teleskopschiene mit einem ersten Schienenelement, einem zweiten Schienenelement, welches an dem ersten Schienenelement über ein Wälzkörperlager oder ein Gleitlager linear verschiebbar gelagert ist, und optional einem dritten Schienenelement, welches an dem ersten oder dem zweiten Schienenelement über ein Wälzkörperlager oder ein Gleitlager linear verschiebbar gelagert ist, wobei wenigstens das erste Schienenelement aus einem gewalzten Stahlblech hergestellt ist,
**dadurch gekennzeichnet, dass** die Oberfläche des Stahlblechs eine mittels eines Nitrierverfahrens hergestellte Oberflächenschicht mit einer Nitrierhärtetiefe (Nht) im Bereich von 0,05 mm bis 0,6 mm aufweist.

2. Teleskopschiene nach Anspruch 1, **dadurch gekennzeichnet, dass** das erste Schienenelement im Querschnitt ein C-Profil aufweist.

3. Teleskopschiene nach einem der vorhergehenden Ansprüche, **dadurch gekennzeichnet, dass** das zweite Schienenelement und/oder das optionale dritte Schienenelement ebenfalls aus einem gewalzten Stahlblech hergestellt sind und im Querschnitt ein C-Profil aufweisen und wobei die Oberfläche des Stahlblechs des zweiten Schienenelements und/oder die Oberfläche des Stahlblechs des optionalen dritten Schienenelements eine mittels eines Nitrierverfahrens hergestellte Oberflächenschicht aufweist.

4. Teleskopschiene nach einem der vorhergehenden Ansprüche, **dadurch gekennzeichnet, dass** die gesamte Oberfläche des aus gewalztem Stahlblech hergestellten ersten Schienenelements mit einer mittels eines Nitrierverfahrens hergestellten Oberflächenschicht versehen ist, wobei vorzugsweise die gesamten Oberflächen aller Schienenelemente der Teleskopschiene mit einer mittels eines Nitrierverfahrens hergestellten Oberflächenschicht versehen.

5. Teleskopschiene nach einem der vorhergehenden Ansprüche, **dadurch gekennzeichnet, dass** der Stahl des Stahlblechs Baustahl, Edelstahl oder mikrolegierter Stahl ist.

6. Teleskopschiene nach einem der vorhergehenden Ansprüche, **dadurch gekennzeichnet, dass** das Profil des ersten Schienenelements und vorzugsweise auch das Profil des zweiten Schienenelements und/oder des optionalen dritten Schienenelements durch Biegeumformung aus gewalztem Stahlblech hergestellt sind.

7. Teleskopschiene nach einem der vorhergehenden Ansprüche, **dadurch gekennzeichnet, dass** das Stahlblech des ersten Schienenelements und vorzugsweise auch das Profil des zweiten Schienenelements und/oder des optionalen dritten Schienenelements eine Materialdicke im Bereich von 1,0 mm bis 4,0 mm, vorzugsweise von 1,2 mm bis 3,0 mm oder von 1,5 mm bis 2,5 mm oder von 1,5 mm bis 2,2 mm aufweist.

8. Teleskopschiene nach einem der vorhergehenden Ansprüche, **dadurch gekennzeichnet, dass** das Stahlblech des ersten Schienenelements und vorzugsweise auch das Stahlblech des zweiten Schienenelements und/oder des optionalen dritten Schienenelements im gesamten Profil die gleiche Materialdicke mit einer maximalen Toleranzabweichung von nicht mehr als ± 10%, vorzugsweise nicht mehr als ± 5%, besonders bevorzugt nicht mehr als ± 3%, bezogen auf die mittlere Materialdicke des gesamten Stahlblechs des jeweiligen Schienenelements, aufweist.

9. Teleskopschiene nach einem der vorhergehenden Ansprüche, **dadurch gekennzeichnet, dass** die Oberflächenschicht des ersten Schienenelements und vorzugsweise auch die Oberflächenschicht des zweiten Schienenelements und/oder des optionalen dritten Schienenelements mittels eines Gasnitrierverfahrens, eines Plasmanitrierverfahrens, eines Vakuumnitrierverfahrens, eines Gas- oder Plasmanitrocarburierverfahrens oder eines Salzbadnitrocarburierverfahrens hergestellt ist, vorzugsweise mittels eines Gasnitrierverfahrens.

10. Teleskopschiene nach einem der vorhergehenden Ansprüche, **dadurch gekennzeichnet, dass** die Oberflächenschicht des ersten Schienenelements und vorzugsweise auch die Oberflächenschicht des zweiten Schienenelements und/oder des optionalen dritten Schienenelements mittels eines Nitrierverfahrens gebildetes Eisennitrid enthält.

11. Teleskopschiene nach einem der vorhergehenden Ansprüche, **dadurch gekennzeichnet, dass** die Oberflächenschicht des ersten Schienenelements und vorzugsweise auch die Oberflächenschicht des zweiten Schienenelements und/oder des optionalen dritten Schienenelements mittels eines dem Nitrierverfahren nachgelagerten Nachoxidationsverfahrens gebildetes Eisenoxid enthält.

12. Teleskopschiene nach einem der vorhergehenden Ansprüche, **dadurch gekennzeichnet, dass** die mittels eines Nitrierverfahrens hergestellte Oberflächenschicht des ersten Schienenelements und die Oberflächenschicht des zweiten Schienenelements und des optionalen dritten Schienenelements eine Nitrierhärtetiefe (Nht) im Bereich von 0,05 mm bis 0,6 mm, vorzugsweise im Bereich von 0,075 mm bis 0,5 mm oder im Bereich von 0,10 mm bis 0,3 mm oder im Bereich von 0,15 mm bis 0,2 mm aufweist.

13. Teleskopschiene nach einem der vorhergehenden Ansprüche, **dadurch gekennzeichnet, dass** die mittels eines Nitrierverfahrens hergestellte Oberflächenschicht des ersten Schienenelements und vorzugsweise auch die Oberflächenschicht des zweiten Schienenelements und/oder des optionalen dritten Schienenelements eine Nitrierhärtetiefe (Nht) im Bereich von 1 % bis 40%, vorzugsweise im Bereich von 3 % bis 35 % oder im Bereich von 5 % bis 20 % oder im Bereich von 8 % bis 15 % der Materialdicke des Stahlblechs aufweist.

14. Teleskopschiene nach einem der vorhergehenden Ansprüche, **dadurch gekennzeichnet, dass** diese als Teilauszug mit einem ersten Schienenelement und einem zweiten Schienenelement oder als Vollauszug mit einem ersten Schienenelement, einem zweiten Schienenelement und einem dritten Schienenelement ausgebildet ist.

## Claims

1. A telescopic rail having a first rail element, a second rail element which is mounted on the first rail element so as to be linearly displaceable via a rolling element bearing or a plain bearing, and optionally a third rail element which is mounted on the first or the second rail element so as to be linearly displaceable via a rolling element bearing or a plain bearing, wherein at least the first rail element is manufactured from a rolled steel sheet, **characterized in that** the surface of the steel sheet has a surface layer produced by means of a nitriding process with a nitriding hardness depth (Nht) in the range of 0.05 mm to 0.6 mm.

2. The telescopic rail according to claim 1, **characterized in that** the first rail element has a C-profile in cross-section.

3. The telescopic rail according to any one of the preceding claims, **characterized in that** the second rail element and/or the optional third rail element are also manufactured from a rolled steel sheet and have a C-profile in cross-section, and wherein the surface of the steel sheet of the second rail element and/or the surface of the steel sheet of the optional third rail element has a surface layer manufactured by means of a nitriding process.

4. The telescopic rail according to any one of the preceding claims, **characterized in that** the entire surface of the first rail element made of rolled sheet steel is provided with a surface layer produced by means of a nitriding process, wherein preferably the entire surfaces of all rail elements of the telescopic rail being provided with a surface layer produced by means of a nitriding process.

5. The telescopic rail according to any one of the preceding claims, **characterized in that** the steel of the steel sheet is construction steel, stainless steel or micro-alloyed steel.

6. Telescopic rail according to one of the preceding claims, **characterized in that** the profile of the first rail element and preferably also the profile of the second rail element and/or the optional third rail element are manufactured from rolled sheet steel by bending forming.

7. The telescopic rail according to any one of the preceding claims, **characterized in that** the sheet steel of the first rail element and preferably also the profile of the second rail element and/or of the optional third rail element has a material thickness in the region from 1.0 mm to 4.0 mm, preferably from 1.2 mm to 3.0 mm or from 1.5 mm to 2.5 mm or from 1.5 mm to 2.2 mm.

8. The telescopic rail according to any one of the preceding claims, **characterized in that** the steel sheet of the first rail element and preferably also the steel sheet of the second rail element and/or the optional third rail element have the same material thickness throughout the profile with a maximum tolerance deviation of not more than ± 10%, preferably not more than ± 5%, particularly preferably not more than ± 3%, relative to the mean material thickness of the entire steel sheet of the respective rail element.

9. The telescopic rail according to one of the preceding claims, **characterized in that** the surface layer of the first rail element and preferably also the surface layer of the second rail element and/or the optional third rail element is manufactured by means of a gas nitriding process, a plasma nitriding process, a vacuum nitriding process, a gas or plasma nitrocarburizing process or a salt bath nitrocarburizing process, preferably by means of a gas nitriding process.

10. The telescopic rail according to any one of the preceding claims, **characterized in that** the surface layer of the first rail element and preferably also the surface layer of the second rail element and/or of the optional third rail element contains iron nitride formed by means of a nitriding process.

11. The telescopic rail according to any one of the preceding claims, **characterized in that** the surface layer of the first rail element and preferably also the surface layer of the second rail element and/or of the optional third rail element contains iron oxide formed by means of a post-oxidation process downstream of the nitriding process.

12. The telescopic rail according to one of the preceding claims, **characterized in that** the surface layer of the first rail element produced by means of a nitriding process and the surface layer of the second rail element and of the optional third rail element has a nitriding hardness depth (Nht) in the region of 0.05 mm to 0.6 mm, preferably in the region of 0.075 mm to 0.5 mm or in the region of 0.10 mm to 0.3 mm or in the region of 0.15 mm to 0.2 mm.

13. The telescopic rail according to any one of the preceding claims, **characterized in that** the surface layer of the first rail element produced by a nitriding process and preferably also the surface layer of the second rail element and/or of the optional third rail element has a nitriding hardness depth (Nht) in the region of 1% to 40%, preferably in the region of 3% to 35% or in the region of 5% to 20% or in the region of 8% to 15% of the material thickness of the steel sheet.

14. The telescopic rail according to one of the preceding claims, **characterized in that** it is designed as a partial extension with a first rail element and a second rail element or as a full extension with a first rail element, a second rail element and a third rail element.

## Revendications

1. Rail télescopique avec un premier élément de rail, un deuxième élément de rail qui est posé linéairement déplaçable au premier élément de rail moyennant un palier à éléments roulants ou un palier coulissant, et optionnellement un troisième élément de rail qui est posé linéairement déplaçable au premier élément de rail ou au deuxième élément de rail moyennant un palier à éléments roulants ou un palier coulissant, au moins le premier élément de rail étant fabriqué à partir d'une tôle d'acier laminée,
**caractérisé en ce que** la surface de la tôle d'acier comprend une couche de surface réalisée selon un procédé de nitruration et ayant une profondeur de nitruration (Nht) de l'ordre de 0,05 mm à 0,6 mm.

2. Rail télescopique selon la revendication 1, **caractérisé en ce que** le premier élément de rail comprend, en coupe transversale, un profil en C.

3. Rail télescopique selon l'une des revendications précédentes, **caractérisé en ce que** le deuxième élément de rail et/ou le troisième élément de rail optionnel sont fabriqués à partir d'une tôle d'acier laminée et comprennent, en coupe transversale, un profil en C, et la surface de la tôle d'acier du deuxième élément de rail et/ou la surface de la tôle d'acier du troisième élément de rail optionnel comprenant une couche de surface réalisée selon un procédé de nitruration.

4. Rail télescopique selon l'une des revendications précédentes, **caractérisé en ce que** la surface entière du premier élément de rail fabriqué à partir d'une tôle d'acier laminée est pourvue d'une couche de surface réalisée selon un procédé de nitruration, l'ensemble des surfaces de tous les éléments de rail du rail téléscopique étant de préférence pourvu d'une couche de surface réalisée selon un procédé de nitruration.

5. Rail télescopique selon l'une des revendications précédentes, **caractérisé en ce que** l'acier de la tôle d'acier est un acier de construction, un acier spécial ou un acier micro allié.

6. Rail télescopique selon l'une des revendications précédentes, **caractérisé en ce que** le profil du premier élément de rail et de préférence aussi le profil du deuxième élément de rail et/ou du troisième élément de rail optionnel sont réalisés en tôle d'acier laminé par pliage.

7. Rail télescopique selon l'une des revendications précédentes, **caractérisé en ce que** la tôle d'acier du premier élément de rail et de préférence également le profil du deuxième élément de rail et/ou du troisième élément de rail ont une épaisseur de matériau de l'ordre de 1,0 mm à 4,0 mm, de préférence de l'ordre de 1,2 mm à 3,0 mm, ou de 1,5 mm à 2,5 mm ou de 1,5 mm à 2,2 mm.

8. Rail télescopique selon l'une des revendications précédentes, **caractérisé en ce que** la tôle d'acier du premier élément de rail et de préférence aussi la tôle d'acier du deuxième élément de rail et/ou du troisième élément de rail optionnel ont, dans le profil entier, la même épaisseur avec un écart maximal de tolérance ne dépassant pas ±10%, de préférence pas ±5%, de façon particulièrement préférée, pas ±3%, par rapport à l'épaisseur de matériau moyenne de la tôle d'acier entière de l'élément de rail respectif.

9. Rail télescopique selon l'une des revendications précédentes, **caractérisé en ce que** la couche de surface du premier élément de rail et de préférence également la couche de surface du deuxième élément de rail et/ou du troisième élément de rail optionnel sont réalisées selon un procédé de nitruration au gaz, un procédé de nitruration au plasma, un procédé de nitruration à vide, un procédé de nitrocarburation au gaz ou au plasma ou un procédé de nitrocarburation au bain de sel, de préférence selon un procédé de nitruration au gaz.

10. Rail télescopique selon l'une des revendications précédentes, **caractérisé en ce que** la couche de surface du premier élément de rail et de préférence aussi la couche de surface du deuxième élément de rail et/ou du troisième élément de rail optionnel contiennent du nitrate de fer formé selon un procédé de nitruration.

11. Rail télescopique selon l'une des revendications précédentes, **caractérisé en ce que** la couche de surface du premier élément de rail et de préférence aussi la couche de surface du deuxième élément de rail et/ou du troisième élément de rail optionnel contiennent de l'oxyde de fer formé selon un procédé de réoxydation subséquent au procédé de nitruration.

12. Rail télescopique selon l'une des revendications précédentes, **caractérisé en ce que** la couche de surface du premier élément de rail, réalisée selon un procédé de nitruration, et la couche de surface du deuxième élément de rail et du troisième élément de rail optionnel ont une profondeur de nitruration (Nht) de l'ordre de 0,075 mm à 0,5 mm ou de l'ordre de 0,10 mm à 0,3 mm ou de l'ordre de 0,15 mm à 0,2 mm.

13. Rail télescopique selon l'une des revendications précédentes, **caractérisé en ce que** la couche de surface du premier élément de rail, réalisée selon un procédé de nitruration, et de préférence aussi la couche de surface du deuxième élément de rail et/ou du troisième élément de rail optionnel ont une profondeur de nitruration (Nht) de l'ordre de 1% à 40%, de préférence de l'ordre de 3% à 35% ou de l'ordre de 5% à 20% ou de l'ordre de 8% à 15 % de l'épaisseur de matériau de la tôle d'acier.

14. Rail télescopique selon l'une des revendications précédentes, **caractérisé en ce que** celui-ci est formé comme une sortie partielle avec un premier élément de rail et un deuxième élément de rail ou comme une sortie complète avec un premier élément de rail, un deuxième élément de rail et un troisième élément de rail.
